(19) Europäisches Patentamt / European Patent Office / Office européen des brevets

(11) **EP 4 692 976 A1**

(12) **EUROPEAN PATENT APPLICATION**
published in accordance with Art. 153(4) EPC

(43) Date of publication:
**11.02.2026 Bulletin 2026/07**

(21) Application number: **24784418.6**

(22) Date of filing: **04.04.2024**

(51) International Patent Classification (IPC):
**G05F 1/56** (2006.01)

(52) Cooperative Patent Classification (CPC):
Y02B 70/10

(86) International application number:
**PCT/CN2024/086150**

(87) International publication number:
**WO 2024/208336 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.04.2023 CN 202310349561**

(71) Applicant: **Vanchip (Tianjin) Technology Co. Ltd
Tianjin 300457 (CN)**

(72) Inventors:
• **LIANG, Shengyu**
  Tianjin 300457 (CN)
• **LI, Songke**
  Tianjin 300457 (CN)
• **WANG, Yongshou**
  Tianjin 300457 (CN)

(74) Representative: **Wang, Bo
Panovision IP
Ebersberger Straße 3
85570 Markt Schwaben (DE)**

(54) **TRANSIENT-RESPONSE LOW DROPOUT REGULATOR, CHIP AND ELECTRONIC DEVICE**

(57) Disclosed in the present invention are a transient-response low dropout regulator, a chip and an electronic device. The low dropout regulator comprises an operational amplifier, a feedback module, a power transistor and a transient response enhancement circuit. The feedback module samples an output voltage. The operational amplifier clamps a feedback voltage output by the feedback module. A unity gain buffer circuit in the transient response enhancement circuit outputs a first voltage in response to the change of a steady-state voltage, while a transient voltage generation circuit in the transient response enhancement circuit generates a second voltage in response to the change of a transient voltage. The second voltage is superposed on the first voltage and then is output to the power transistor, and then the power transistor supplies the stable output voltage to a load.

FIG. 1

**Description**

**BACKGROUND**

**Technical Field**

The present invention relates to a transient-response low dropout regulator, to a power management chip and an electronic device using the low dropout regulator, and to the field of power regulation circuit technologies.

**Related Art**

With the development of communication technologies, a modulation manner of a modern communication system becomes increasingly complex, and an operating frequency also becomes increasingly high. This imposes higher requirements on transient response performance of a power management chip. In a radio frequency module, a low dropout regulator (Low Dropout Regulator, LDO) is usually used as the power management chip to provide a stable bias voltage to the radio frequency module. However, a current required by the radio frequency module is transiently changed at a high frequency, which means that a load current of the LDO needs to be transiently changed at a high frequency. If the LDO cannot provide a high-frequency transient current in time, a phenomenon of large overshoot and undershoot occurs on the bias voltage, and it requires a long time for returning to a steady-state value. The fluctuation of the bias voltage severely worsens performance of the radio frequency module, limiting development of a radio frequency communication technology. Therefore, how to improve a transient response speed of the low dropout regulator becomes a problem to be urgently resolved by a person skilled in the art.

**SUMMARY**

A primary technical problem to be resolved in the present invention is to provide a transient-response low dropout regulator.
Another technical problem to be resolved in the present invention is to provide a power management chip including the low dropout regulator.
Still another technical problem to be resolved in the present invention is to provide an electronic device including the low dropout regulator.
To achieve the foregoing objectives, the present invention adopts the following technical solutions:

According to a first aspect of the embodiments of the present invention, a transient-response low dropout regulator is provided, including an operational amplifier, a feedback module, a power transistor, and a transient response enhancement circuit, an output voltage of the low dropout regulator being applied to a load circuit; where
the feedback module is configured to sample the output voltage and output a feedback voltage;
the operational amplifier is configured to: clamp, based on a reference voltage, the feedback voltage outputted by the feedback module, and output an analog voltage to the transient response enhancement circuit;
the transient response enhancement circuit includes a unity gain buffer circuit and at least one transient voltage generation circuit, where the unity gain buffer circuit is configured to output a first voltage based on the analog voltage, the transient voltage generation circuit is configured to generate a second voltage based on an input voltage, and the transient response enhancement circuit is configured to output a transient enhancement voltage to the power transistor based on the first voltage and the second voltage; and
the power transistor is configured to generate the output voltage based on the transient enhancement voltage.

According to a second aspect of the embodiments of the present invention, a power management chip is provided, including the foregoing low dropout regulator.
According to a third aspect of the embodiments of the present invention, an electronic device is provided, including the foregoing low dropout regulator.
Compared with the related art, in the low dropout regulator provided in the present invention, the feedback module samples the output voltage, the operational amplifier clamps the feedback voltage outputted by the feedback module, the unity gain buffer circuit in the transient response enhancement circuit outputs the first voltage to respond to a change of a steady-state voltage. Meanwhile, the transient voltage generation circuit in the transient response enhancement circuit generates the second voltage to respond to a change of a transient voltage, superimposes the second voltage onto the first voltage, and outputs a superimposed voltage to the power transistor, and then the power transistor outputs the superimposed voltage to a load. The low dropout regulator can improve a transient response speed and provide a stable output voltage to the load, thereby resolving problems in the related art, and effectively reduce amplitudes of overshoot and undershoot of the output voltage and a time taken for the output voltage to return to a steady-state value, which has good application value.

**BRIEF** DESCRIPTION OF THE DRAWINGS

FIG. 1 is a structural block diagram of a low dropout regulator according to an embodiment of the present invention;
FIG. 2 is a schematic circuit diagram of a low dropout regulator according to an embodiment of the present invention;
FIG. 3 is a schematic circuit diagram of a transient response enhancement circuit according to an embodiment of the present invention;
FIG. 4 is a schematic circuit diagram of a transient response enhancement circuit according to another embodiment of the present invention;
FIG. 5 is a schematic circuit diagram of a transient response enhancement circuit according to still another embodiment of the present invention;
FIG. 6 is a diagram of comparison between transient response effects of a low dropout regulator according to an embodiment of the present invention; and
FIG. 7 is a diagram of an example of an electronic device using a low dropout regulator according to an embodiment of the present invention.

**DETAILED DESCRIPTION**

Technical content of the present invention is described in detail below with reference to the accompanying drawings and specific embodiments.

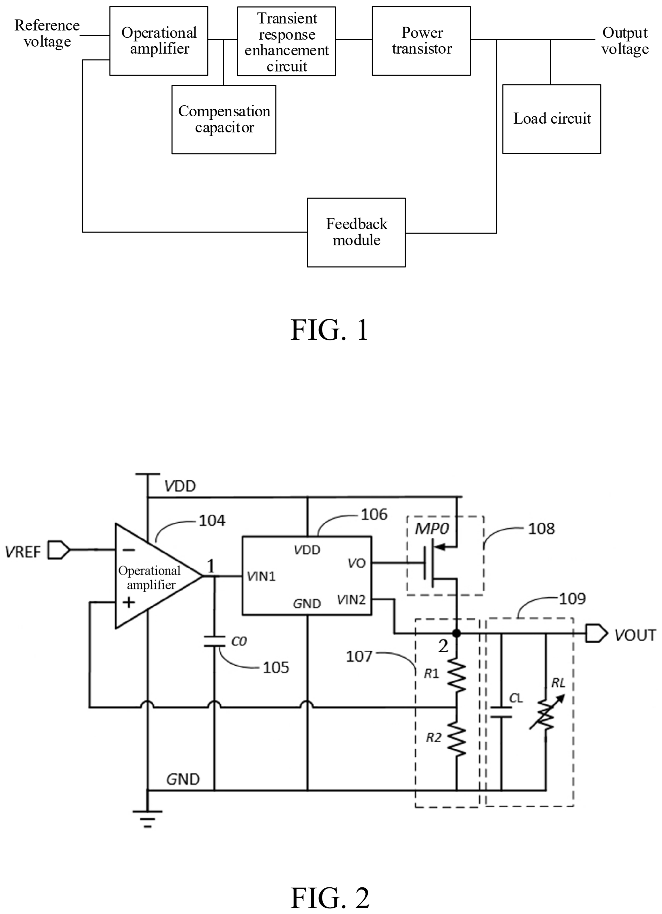

As shown in FIG. 1, the present invention first provides a transient-response low dropout regulator, including an operational amplifier, a feedback module, a power transistor, and a transient response enhancement circuit, and an output voltage of the low dropout regulator is applied to a load circuit.

The feedback module is configured to sample the output voltage and output a feedback voltage;

the operational amplifier is configured to: clamp, based on a reference voltage, the feedback voltage outputted by the feedback module, and output an analog voltage to the transient response enhancement circuit;
the transient response enhancement circuit includes a unity gain buffer circuit and at least one transient voltage generation circuit, where the unity gain buffer circuit is configured to output a first voltage based on the applied analog voltage, the at least one transient voltage generation circuit is configured to generate a second voltage based on an applied input voltage, and the transient response enhancement circuit is configured to output a transient enhancement voltage to the power transistor based on the first voltage and the second voltage; and
the power transistor is configured to generate the output voltage based on the applied transient enhancement voltage.

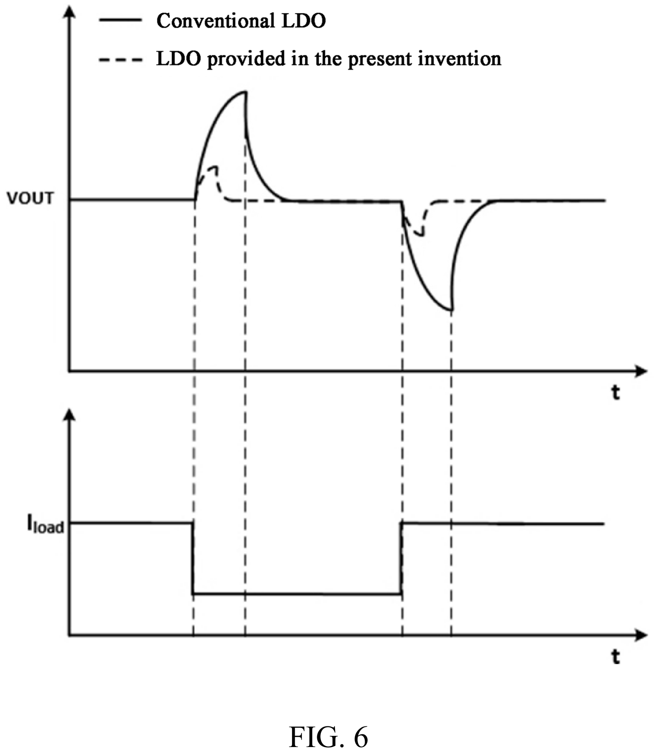

In the foregoing low dropout regulator, the feedback module samples the output voltage, the operational amplifier clamps the feedback voltage outputted by the feedback module, the unity gain buffer circuit of the transient response enhancement circuit performs voltage buffering on the analog voltage outputted by the operational amplifier and outputs the first voltage to respond to a change of a steady-state voltage in the low dropout regulator. Meanwhile, the at least one transient voltage generation circuit of the transient response enhancement circuit generates the second voltage to respond to a change of a transient voltage in the low dropout regulator, superimposes the second voltage onto the first voltage, and outputs a superimposed voltage to the power transistor, and then the power transistor outputs the superimposed voltage to a load. Referring to FIG. 6, the low dropout regulator can improve a transient response speed and provide a stable output voltage to the load, thereby resolving problems in the related art, and effectively reduce amplitudes of overshoot and undershoot of the output voltage and a time taken for the output voltage to return to a steady-state value, which has good application value.

Embodiment 1

As shown in FIG. 2, in an embodiment of the present invention, a reference voltage VREF is applied to a first input terminal of an operational amplifier 104, a feedback voltage outputted by a second terminal of a feedback module 107 is applied to a second input terminal of the operational amplifier 104, a first power input terminal of the operational amplifier 104 is connected to a power terminal VDD, a second power input terminal of the operational amplifier is grounded (that is, connected to a ground terminal GND), and an output terminal of the operational amplifier, a first terminal of the compensation capacitor 105, and a first input terminal of a transient response enhancement circuit are connected to a first node 1;

a second input terminal of the transient response enhancement circuit 106, a first terminal of the feedback module 107, and a second terminal of a power transistor 108 are connected to a second node 2, a first power input terminal of the transient response enhancement circuit 106 is connected to the power terminal VDD, a second power input terminal of the transient response enhancement circuit is grounded, and an output terminal of the transient response enhancement circuit is connected to a control terminal of the power transistor;

a second terminal of the compensation capacitor 105 and a third terminal of the feedback module 107 are grounded; and

a first terminal of the power transistor 108 is connected to the power terminal.

In an embodiment of the present invention, a load circuit 109 includes a load capacitor $C_L$ and a load resistor $R_L$, an output voltage VOUT of a low dropout regulator is applied to both a first terminal of the load resistor $R_L$ and a first terminal of the load capacitor $C_L$, and a second terminal of the $C_L$ and a second terminal of the $R_L$ are both connected to the ground terminal GND. The load capacitor $C_L$ and the load resistor $R_L$ are variable loads, and a transient change of a load causes a high-frequency transient change of a load current. When the low dropout regulator cannot provide a high-frequency transient current in time, phenomena of large overshoot and undershoot of the output voltage of the low dropout regulator easily occurs. In the low dropout regulator provided in this embodiment, by using at least one transient voltage generation circuit of the transient response enhancement circuit 106, a transient voltage can be obtained through conversion when a transient change occurs in the load current, and the transient voltage is outputted to the power transistor 108. The power transistor 108 responds to the transient change in the load current in time, thereby reducing amplitudes of overshoot and undershoot of the output voltage and reducing a time taken for the output voltage to return to a steady-state value.

The first input terminal of the operational amplifier 104 is an inverting input terminal to which the reference voltage VREF is applied. The second input terminal of the operational amplifier 104 is a non-inverting input terminal to which the feedback voltage outputted by the feedback module 107 is applied. The feedback module 107 includes a resistor R1 and a resistor R2. A first terminal of R1 and the output voltage are connected to the second node 2. A second terminal of R1 is connected to a first terminal of R2, and a second terminal of R2 is grounded. The feedback module 107 is mainly configured to divide the output voltage VOUT of the low dropout regulator, and output the output voltage VOUT to the inverting input terminal of the operational amplifier 104. In other words, the feedback voltage outputted by the feedback module 107 is obtained by sampling the output voltage VOUT. The first power input terminal of the operational amplifier 104 is connected to the power terminal VDD, and the second power input terminal of the operational amplifier is grounded. The operational amplifier clamps, by using the applied reference voltage VREF, the feedback voltage passing through a feedback loop, generates an analog voltage, and outputs the analog voltage to the transient response enhancement circuit as an input voltage at the first input terminal of the transient response enhancement circuit.

The output voltage VOUT of the low dropout regulator is applied to the second input terminal of the transient response enhancement circuit 106, the first power input terminal of the transient response enhancement circuit is connected to the power terminal VDD, and the second power input terminal of the transient response enhancement circuit 106 is grounded. The transient response enhancement circuit performs, by using a unity gain buffer circuit, voltage buffering on the analog voltage outputted by the operational amplifier 104 to output and adjust a gate voltage of the power transistor 108, so that a current flowing through the power transistor is approximately equal to the load current. In addition, a change of the input voltage is superimposed onto a gate of the power transistor 108 by using the at least one transient voltage generation circuit, so that the power transistor 108 can quickly keep up with a change of the load current, thereby reducing fluctuation of the output voltage of the low dropout regulator. The power transistor 108 may be a P-channel field effect transistor. A drain current flowing through the power transistor 108 is adjusted based on a received transient enhancement voltage of the transient response enhancement circuit 106, to provide the output voltage to the load circuit 109.

The first terminal of the compensation capacitor 105, the output terminal of the operational amplifier 104, and the first input terminal of the transient response enhancement circuit 106 are connected to the first node 1, and the second terminal of the compensation capacitor 105 is grounded. The compensation capacitor 105 is a variable capacitor. A position of a dominant pole of a loop of the low dropout regulator is adjusted by adjusting a capacitance value, so that the loop satisfies a stability requirement.

According to the low dropout regulator provided in this embodiment, the unity gain buffer circuit of the transient response enhancement circuit buffers the analog voltage outputted by the operational amplifier, and the at least one transient voltage generation circuit follows the transient voltage to output the transient enhancement voltage to the power transistor, to achieve a stable output of the low dropout regulator.

Embodiment 2

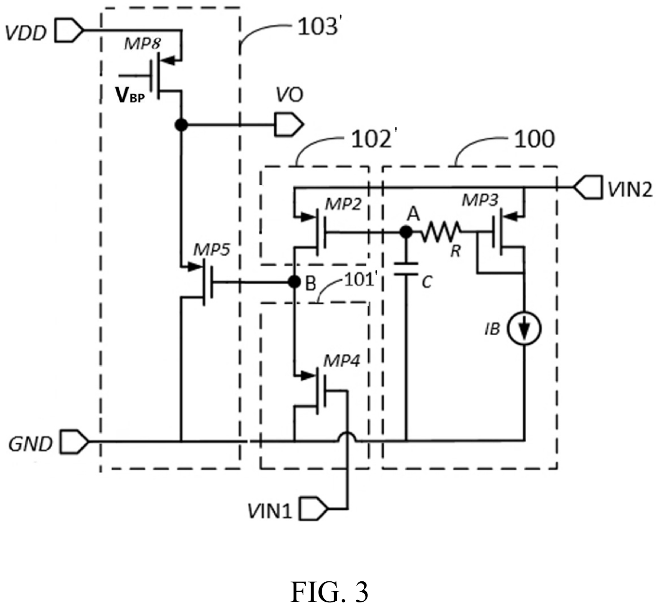

As shown in FIG. 3, in an optional embodiment, a transient response enhancement circuit includes a unity gain buffer circuit 101', a low-pass filter circuit 100, a first transient voltage generation circuit 102', and a first follower circuit 103'. The unity gain buffer circuit 101' is configured to perform voltage buffering on an applied analog voltage VIN1 and output a buffered voltage to the first follower circuit 103';

the low-pass filter circuit 100 is configured to perform low-pass filtering on an applied input voltage VIN2 and output a filtered voltage, the filtered voltage lagging behind the input voltage VIN2;

the first transient voltage generation circuit 102' is configured to generate a first transient voltage based on the input voltage VIN2 and the filtered voltage, and output the first transient voltage to the first follower circuit; and

the first follower circuit 103' is configured to output a transient enhancement voltage based on the buffered voltage and the transient voltage.

In an embodiment of the present invention, the unity gain buffer circuit 101' of the transient response enhancement circuit buffers an analog voltage outputted by an operational amplifier to generate the buffered voltage, that is, achieves a voltage buffering function of a conventional low dropout regulator. Meanwhile, the low-pass filter circuit 100 filters an output voltage of the low dropout regulator to obtain the filtered voltage lagging behind the input voltage VIN2, then the first transient voltage generation circuit 102' generates, based on the filtered voltage and the input voltage, the first transient voltage representing a transient change of the output voltage, and then the first follower circuit 103' superimposes the first transient voltage onto the buffered voltage to output the transient enhancement voltage that can represent both the buffered voltage and the first transient voltage, that is, provides a gate voltage to a gate of a power transistor, so that the power transistor adjusts a drain current to adapt to a change of a load current, thereby providing a stable output voltage to a load circuit 109.

As shown in FIG. 3, in an embodiment of the present invention, the unity gain buffer circuit includes a first transistor MP4, and the first transistor includes a control terminal, a first terminal, and a second terminal.

In an embodiment of the present invention, the first transistor MP4 is a P-channel field effect transistor, the unity gain buffer circuit performs voltage buffering on the analog voltage VIN1 outputted by the operational amplifier, and a voltage $V_B$ of a third node B is an output of the unity gain buffer circuit. In other words, in a steady state, a relationship between the analog voltage VIN1 inputted by the unity gain buffer circuit and the voltage $V_B$ outputted by the unity gain buffer circuit may be represented as $V_B=VIN1+V_{GS4}$, where $V_{GS4}$ is a gate-source voltage of the transistor MP4.

The low-pass filter circuit 100 includes a second transistor MP3, a bias current source IB, a first resistor R, and a first capacitor C. The second transistor includes a control terminal, a first terminal, and a second terminal, the bias current source IB includes a first terminal and a second terminal, the first resistor R includes a first terminal and a second terminal, and the first capacitor C includes a first terminal and a second terminal.

In an embodiment of the present invention, the second transistor MP3 is a P-channel field effect transistor. A drain of the second transistor MP3, a gate of the second transistor MP3, and a positive electrode of the bias current source IB are connected to the first terminal of the first resistor, and the input voltage VIN2 is applied to a source of the second transistor MP3. A negative electrode of the bias current source IB is connected to a ground terminal GND. The second terminal of the first resistor R and the first terminal of the first capacitor C are connected to a fourth node A, and the second terminal of the first capacitor C is connected to the ground terminal GND. When a transient change occurs in the input voltage VIN2, a gate voltage of the second transistor MP3 quickly follows the change of VIN2. However, due to a low-pass filtering feature of RC, a change of the gate voltage of the second transistor MP3 needs to be filtered before being transmitted to the fourth node A. Therefore, a change of the filtered voltage $V_A$ lags behind the change of the input voltage VIN2. In this way, when the transient change occurs in the input voltage VIN2, $V_A$ can keep an initial voltage unchanged within a certain period of time.

The first transient voltage generation circuit 102' includes a third transistor MP2, and the third transistor includes a control terminal, a first terminal, and a second terminal.

In an embodiment of the present invention, the third transistor MP2 is a P-channel field effect transistor, a gate of the third transistor MP2 is connected to the fourth node A, and the input voltage VIN2 is applied to a source of the third transistor MP2. Meanwhile, the third transistor MP2 and the first transistor MP4 form a source follower, the first transistor MP4 is an input transistor, the third transistor MP2 is a bias current transistor, and existence of the first transistor MP4 makes $V_B=VIN1+V_{GS4}$. A gate voltage of the third transistor MP2 is the filtered voltage $V_A$ of the fourth node A, and a source voltage of the third transistor MP2 is the input voltage VIN2. When the transient change $\Delta V_{IN2}$ occurs in VIN2, because the change of the filtered voltage $V_A$ lags behind the change of the input voltage VIN2, a transient change $\Delta V_{IN2}$ occurs in a gate-source voltage $V_{GS2}$ of the third transistor MP2, and a transient change $g_{mp2}\Delta V_{In2}$ occurs in a drain current of the third transistor MP2. Therefore, a transient change occurs in the voltage $V_B$:

$$\Delta V_B = \frac{g_{mp2}}{g_{mp4}} \Delta V_{IN2}$$

Actually, a transient voltage is superimposed onto a steady-state voltage of the third node B:

$$V_B = \text{VIN1} + V_{GS4} + \Delta V_B = \text{VIN1} + V_{GS4} + \frac{g_{mp2}}{g_{mp4}} \Delta V_{IN2}$$

where $\Delta V_B$ is a transient variation of the voltage $V_B$, $\Delta V_{IN2}$ is a transient variation of the input voltage VIN2, $g_{mp2}$ and $g_{mp4}$ are respectively transconductances of the third transistor MP2 and the first transistor MP4, $V_{GS4}$ is the gate-source voltage of the first transistor MP4, and VIN1 is the analog voltage outputted by the operational amplifier.

The first follower circuit 103' includes a fourth transistor MP5 and a fifth transistor MP8, the fourth transistor includes a control terminal, a first terminal, and a second terminal, and the fifth transistor includes a control terminal, a first terminal, and a second terminal.

In an embodiment of the present invention, the fourth transistor MP5 is a P-channel field effect transistor, the fifth transistor MP8 is a P-channel field effect transistor, a gate of the fourth transistor MP5 is connected to the third node B, a drain of the fourth transistor MP5 is connected to the ground terminal GND, and a source of the fourth transistor MP5 and a drain of the fifth transistor MP8 are connected to form an output terminal of the transient response enhancement circuit. A source of the fifth transistor MP8 is connected to the power terminal VDD, and an externally inputted voltage signal is applied to a gate of the fifth transistor MP8, which is kept in a normally-on state, for providing a bias current to the fourth transistor MP5.

The fourth transistor MP5 and the fifth transistor MP8 form a source follower structure, and an inputted voltage $V_B$ and an outputted transient enhancement voltage VO of the fourth transistor MP5 and the fifth transistor MP8 in a transient state are represented as:

$$\text{VO} = V_B + V_{GS5} = \text{VIN1} + V_{GS4} + V_{GS5} + \Delta V_B = \text{VIN1} + V_{GS4} + V_{GS5} + \frac{g_{mp2}}{g_{mp4}} \Delta V_{IN2}$$

where $V_{GS5}$ is a gate-source voltage of the fourth transistor MP5.

It can be known that, when the transient change $\Delta V_{IN2}$ occurs in the input voltage VIN2, the transient enhancement voltage VO can quickly respond to the change of the input voltage VIN2 while responding to the analog voltage, thereby achieving a fast transient response.

In an embodiment of the present invention, a low-pass filter filters the transient voltage outputted by the low dropout regulator, to obtain the filtered voltage lagging behind the input voltage. The unity gain buffer circuit buffers the analog voltage outputted by the operational amplifier, to generate the buffered voltage, the first transient voltage generation circuit generates the first transient voltage based on the filtered voltage and the input voltage, and the first transient voltage is superimposed onto the buffered voltage to output the transient enhancement voltage, to provide the gate voltage to the gate of the power transistor, so that the power transistor adjusts the drain current to provide the output voltage to the load circuit 109.

Embodiment 3

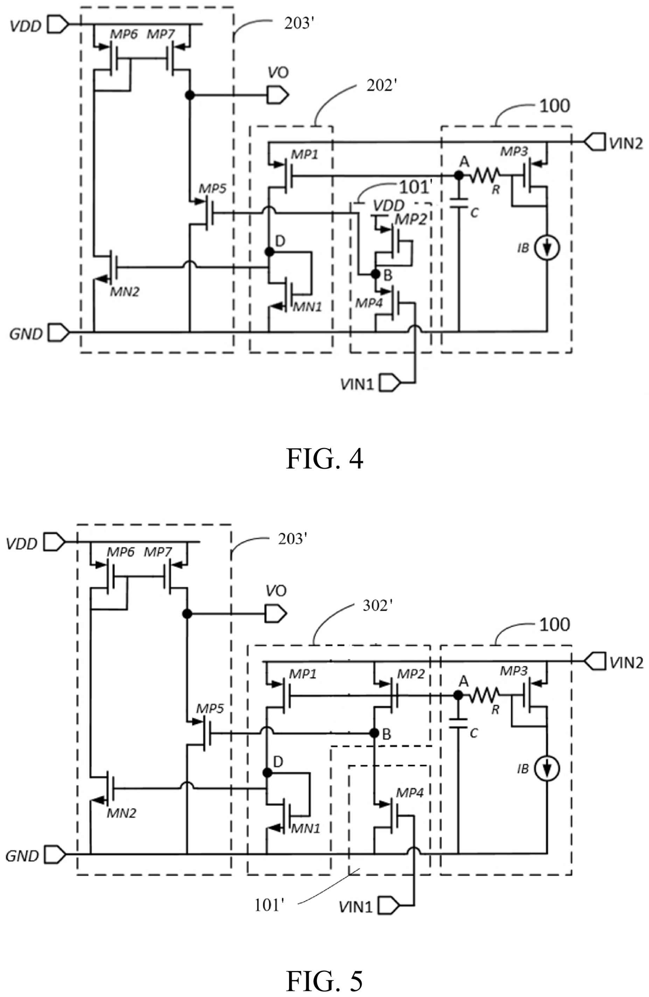

As shown in FIG. 4, in an optional embodiment, a transient response enhancement circuit includes a unity gain buffer circuit 101', a low-pass filter circuit 100, a second transient voltage generation circuit 202', and a second follower circuit 203'.

The unity gain buffer circuit 101' is configured to perform voltage buffering on an applied analog voltage VIN1 and output a buffered voltage to the second follower circuit 203';

the low-pass filter circuit 100 is configured to perform low-pass filtering on an applied input voltage VIN2 and output a filtered voltage, the filtered voltage lagging behind the input voltage VIN2;

the second transient voltage generation circuit 202' is configured to generate a second transient voltage based on the input voltage VIN2 and the filtered voltage, and output the second transient voltage to the second follower circuit 203'; and

the second follower circuit 203' is configured to output a transient enhancement voltage based on the analog voltage and the second transient voltage.

In an embodiment of the present invention, the unity gain buffer circuit of the transient response enhancement circuit buffers the analog voltage outputted by an operational amplifier to generate the buffered voltage, that is, achieves a voltage buffering function of a conventional low dropout regulator. Meanwhile, a low-pass filter filters a transient voltage outputted by the low dropout regulator to obtain the filtered voltage lagging behind the input voltage, then the second transient voltage generation circuit generates, based on the filtered voltage and the input voltage, the second transient voltage representing a transient change of the output voltage, and then the second follower circuit superimposes the second transient voltage onto the buffered voltage to output the transient enhancement voltage that can represent both the buffered voltage and the second transient voltage, that is, provides a gate voltage to a gate of a power transistor, so that the power transistor adjusts a drain current to provide the output voltage to a load circuit 109.

As shown in FIG. 4, in an embodiment of the present invention, the analog voltage VIN1 may be directly applied to a gate of a fourth transistor MP5. In this case, a drain and a gate of a first transistor MP2 are connected to a third node B, and a source of the first transistor MP2 is connected to a power terminal VDD. In this way, the unity gain buffer circuit 101' is equivalent to a wired connection, and forms a voltage buffer.

The low-pass filter circuit 100 includes a second transistor MP3, a bias current source IB, a first resistor R, and a first capacitor C. The second transistor includes a control terminal, a first terminal, and a second terminal, the bias current source includes a first terminal and a second terminal, the first resistor includes a first terminal and a second terminal, and the first capacitor includes a first terminal and a second terminal.

In an embodiment of the present invention, the second transistor MP3 is a P-channel field effect transistor. A drain of the second transistor MP3, a gate of the second transistor MP3, and a positive electrode of the bias current source IB are connected to the first terminal of the first resistor, and the input voltage VIN2 is applied to a source of the second transistor MP3. A negative electrode of the bias current source is connected to a ground terminal GND. The second terminal of the first resistor R and the first terminal of the first capacitor C are connected to a fourth node A, and the second terminal of the first capacitor is connected to the ground terminal GND. When a transient change occurs in the input voltage VIN2, a gate voltage of the second transistor MP3 quickly follows the change of VIN2. However, due to a low-pass filtering feature of RC, the change of the gate voltage of the second transistor MP3 needs to be filtered before being transmitted to the fourth node A. Therefore, a change of a voltage $V_A$ lags behind the change of the input voltage VIN2. In this way, when the transient change occurs in VIN2, $V_A$ can keep an initial voltage unchanged within a certain period of time.

The second transient voltage generation circuit 202' includes a sixth transistor MP1 and a seventh transistor MN1. The sixth transistor includes a control terminal, a first terminal, and a second terminal; and the seventh transistor includes a control terminal, a first terminal, and a second terminal.

In an embodiment of the present invention, the sixth transistor MP1 is a P-channel field effect transistor, and the seventh transistor MN1 is an N-channel field effect transistor. A drain of the sixth transistor MP1, a drain of the seventh transistor MN1, and a gate of the seventh transistor MN1 are connected to a fifth node, a gate of the sixth transistor MP1 and the low-pass filter circuit are connected to the fourth node A, the input voltage VIN2 is applied to a source of the sixth transistor MP1, and a source of the seventh transistor MN1 is connected to the ground terminal GND. A gate voltage of the sixth transistor MP1 is the filtered voltage $V_A$ outputted by the low-pass filter circuit, and a source voltage of the sixth transistor MP1 is the input voltage VIN2. When the transient change $\Delta V_{IN2}$ occurs in the input voltage VIN2, because the filtered voltage $V_A$ lags behind VIN2, a transient change $\Delta V_{IN2}$ occurs in a gate-source voltage $V_{GS1}$ of the sixth transistor MP1, and a transient change $g_{mp1}\Delta V_{In2}$ occurs in a drain current of the sixth transistor MP1. The transient current is transmitted to the second follower circuit.

The second follower circuit 203' includes the fourth transistor MP5, an eighth transistor MN2, a ninth transistor MP6, and a tenth transistor MP7. The fourth transistor includes a control terminal, a first terminal, and a second terminal; the eighth transistor includes a control terminal, a first terminal, and a second terminal; the ninth transistor includes a control terminal, a first terminal, and a second terminal; and the tenth transistor includes a control terminal, a first terminal, and a second terminal.

In an embodiment of the present invention, the fourth transistor MP5 is a P-channel field effect transistor, the ninth transistor MP6 is a P-channel field effect transistor, the tenth transistor MP7 is a P-channel field effect transistor, and the eighth transistor MN2 is an N-channel field effect transistor.

A drain of the eighth transistor MN2 is connected to a drain of the ninth transistor MP6, a gate of the ninth transistor MP6 is connected to a gate of the tenth transistor MP7, the drain of the ninth transistor MP6 is connected to the gate of the ninth transistor MP6, a gate of the eighth transistor MN2 is connected to the fifth node, and a source of the eighth transistor MN2 is connected to the ground terminal GND. A source of the ninth transistor MP6 is connected to a power terminal VDD, a source of the tenth transistor MP7 is connected to the power terminal VDD, and a drain of the tenth transistor MP7 is connected to a source of the fourth transistor MP5 to form an output terminal of the transient response enhancement circuit. The analog voltage VIN1 inputted by the unity gain buffer circuit is applied to the gate of the fourth transistor MP5, and a drain of the fourth transistor MP5 is connected to the ground terminal GND. The eighth transistor MN2 and the seventh transistor MN1 form a current mirror structure, and copy a transient current generated by the second transient voltage generation circuit to a current branch formed by the eighth transistor MN2 and the ninth transistor MP6. A transient current flowing through the eighth transistor MN2 may be represented as: $\frac{g_{mp1}g_{mn2}}{g_{mn1}}\Delta V_{IN2}$ . The ninth transistor MP6 and the tenth transistor MP7 form a current mirror structure, and further copy the current to a current branch in which the tenth transistor MP7 is located. A transient current flowing through the tenth transistor MP7 may be represented as: $\frac{g_{mp1}g_{mn2}g_{mp7}}{g_{mn1}g_{mp6}}\Delta V_{IN2}$ . The second transient voltage $\Delta V_{O2}$ generated by the transient current flowing through the tenth transistor MP7 may be represented as:

$$\Delta V_{O2} = \frac{g_{mp1}g_{mn2}g_{mp7}}{g_{mn1}g_{mp5}g_{mp6}}\Delta V_{IN2}$$

By superimposing impact of a transient bias current of the tenth transistor MP7 on the second transient voltage, it may be obtained that a finally outputted transient enhancement voltage VO is represented as:

$$VO = VIN1 + V_{GS4} + V_{GS5} + \Delta V_{O2} = VIN1 + V_{GS4} + V_{GS5} + \frac{g_{mp1}g_{mn2}g_{mp7}}{g_{mn1}g_{mp5}g_{mp6}}\Delta V_{IN2}$$

where $V_{GS4}$ is a gate-source voltage of MP4, $V_{GS5}$ is a gate-source voltage of MP5, $g_{mp1}, g_{mp6}$ and $g_{mp7}$ are respectively transconductances of the transistor MP1 the transistor MP6, and the transistor MP7, and $g_{mn1}$, $g_{mn2}$ are respectively transconductances of the transistor MN1 and the transistor MN2.

It can be seen from that, when the transient change $\Delta V_{IN2}$ occurs in the input voltage VIN2, the change of the input voltage VIN2 can be quickly responded to while the analog voltage is responded to, thereby achieving a fast transient response.

In an embodiment of the present invention, the low-pass filter filters the transient voltage outputted by the low dropout regulator, to obtain the filtered voltage lagging behind the input voltage, the unity gain buffer circuit buffers the analog voltage outputted by the operational amplifier, to generate the buffered voltage, the second transient voltage generation circuit generates the second transient voltage based on the filtered voltage and the input voltage, and the second transient voltage is superimposed onto the buffered voltage to output the transient enhancement voltage, to provide the gate voltage to the gate of the power transistor, so that the power transistor adjusts the drain current to provide the output voltage to the load circuit 109.

Embodiment 4

As shown in FIG. 5, in an optional embodiment, a transient response enhancement circuit includes a unity gain buffer circuit 101', a low-pass filter circuit 100, a transient voltage generation circuit 302', and a second follower circuit 203'.

The unity gain buffer circuit 101' is configured to perform voltage buffering on an applied analog voltage VIN1 and output a buffered voltage to the second follower circuit 203';

the low-pass filter circuit 100 is configured to perform low-pass filtering on an applied input voltage VIN2 and output a filtered voltage, the filtered voltage lagging behind the input voltage;
the transient voltage generation circuit 302' is configured to generate a first transient voltage and a second transient voltage based on the input voltage and the filtered voltage, and output the first transient voltage and the second transient voltage to the second follower circuit; and
the second follower circuit 203' is configured to output a transient enhancement voltage based on the analog voltage, the first transient voltage, and the second transient voltage.

In an embodiment of the present invention, the unity gain buffer circuit of the transient response enhancement circuit buffers an analog voltage outputted by an operational amplifier to generate the buffered voltage, that is, achieves a voltage buffering function of a conventional low dropout regulator. Meanwhile, a low-pass filter filters a transient voltage outputted by the low dropout regulator to obtain the filtered voltage lagging behind the input voltage, then a first transient voltage generation circuit generates, based on the filtered voltage and the input voltage, the first transient voltage representing a transient change of the output voltage, then a second transient voltage generation circuit generates, based on the filtered voltage and the input voltage, the second transient voltage representing the transient change of the output voltage, then the second follower circuit superimposes the first transient voltage and the second transient voltage onto the buffered voltage to output the transient enhancement voltage that can represent all of the buffered voltage, the first transient voltage, and the second transient voltage, that is, provides a gate voltage to a gate of a power transistor, so that the power transistor adjusts a drain current to provide the output voltage to a load circuit 109.

As shown in FIG. 5, in an embodiment of the present invention, the unity gain buffer circuit includes a first transistor MP4, and the first transistor includes a control terminal, a first terminal, and a second terminal. The first transistor MP4 may be a P-channel field effect transistor. The unity gain buffer circuit performs voltage buffering on the analog voltage VIN1 outputted by the operational amplifier, and a voltage $V_B$ of a third node B is an output of the unity gain buffer circuit. In other words, in a steady state, a relationship between the analog voltage VIN1 inputted by the unity gain buffer circuit and the voltage $V_B$ outputted by the unity gain buffer circuit may be represented as $V_B$=VIN1+$V_{GS4}$, where $V_{GS4}$ is a gate-source voltage of the transistor MP4.

The low-pass filter circuit 100 includes a second transistor MP3, a bias current source, a first resistor, and a first capacitor. The second transistor includes a control terminal, a first terminal, and a second terminal, the bias current source includes a first terminal and a second terminal, the first resistor includes a first terminal and a second terminal, and the first capacitor includes a first terminal and a second terminal.

In an embodiment of the present invention, the second transistor MP3 may be a P-channel field effect transistor. A drain and a gate of the second transistor MP3, a positive electrode of the bias current source IB, and the first terminal of the first resistor are connected to a fourth node A, and the input voltage, that is, VIN2, is applied to a source of the second transistor MP3. A negative electrode of the bias current source is connected to a ground terminal GND. The second terminal of the first resistor R and the first terminal of the first capacitor C are connected to the fourth node A, and the second terminal of the first capacitor is connected to the ground terminal GND. When a transient change occurs in input voltage VIN2, a gate voltage of the second transistor MP3 quickly follows the change of VIN2. However, due to a low-pass feature of a RC filter, the change of the gate voltage of MP3 needs to be filtered before being transmitted to the fourth node A. Therefore, a change of the filtered voltage $V_A$ lags behind the change of the input voltage VIN2. In this way, when the transient change occurs in VIN2, $V_A$ can keep an initial voltage unchanged within a certain period of time.

The first transient voltage generation circuit includes a third transistor MP2, and the third transistor includes a control terminal, a first terminal, and a second terminal. In an embodiment of the present invention, the third transistor MP2 may be a P-channel field effect transistor, a gate of the third transistor MP2 is connected to the fourth node A, and the input voltage VIN2 is applied to a source of the third transistor MP2. Meanwhile, the third transistor MP2 and the first transistor MP4 form a source follower, the first transistor MP4 is an input transistor, the third transistor MP2 is a bias current transistor, and existence of the first transistor MP4 makes $V_B$=VIN1+$V_{GS4}$. A gate voltage of the third transistor MP2 is the filtered voltage $V_A$ of the fourth node A, and a source voltage of the third transistor MP2 is the input voltage VIN2. When the transient change $\Delta V_{IN2}$ occurs in VIN2, because the filtered voltage $V_A$ lags behind the input voltage VIN2, a transient change $\Delta V_{IN2}$ occurs in a gate-source voltage $V_{GS2}$ of the third transistor MP2, and a transient change $g_{mp2}\Delta V_{IN2}$ occurs in a drain current of the third transistor MP2. Therefore, a transient change occurs in the voltage $V_B$:

$$\Delta V_B = \frac{g_{mp2}}{g_{mp4}}\Delta V_{IN2}$$

Actually, a transient voltage is superimposed onto a steady-state voltage of the third node B:

$$V_B = \text{VIN1} + V_{GS4} + \Delta V_B = \text{VIN1} + V_{GS4} + \frac{g_{mp2}}{g_{mp4}}\Delta V_{IN2}$$

where $g_{mp2}$ and $g_{mp4}$ are respectively transconductances of the transistor MP2 and the transistor MP4.

It should be noted that in this embodiment, the output voltage of the unity gain buffer circuit and the output voltage of the first transient voltage generation circuit are superimposed.

The second transient voltage generation circuit includes a sixth transistor MP1 and a seventh transistor MN1. The sixth transistor includes a control terminal, a first terminal, and a second terminal; and the seventh transistor includes a control terminal, a first terminal, and a second terminal.

In an embodiment of the present invention, the sixth transistor MP1 is a P-channel field effect transistor, and the seventh transistor MN1 is an N-channel field effect transistor. A drain of the sixth transistor MP1, a drain of the seventh transistor MN1, and a gate of the seventh transistor MN1 are connected to a fifth node, a gate of the sixth transistor MP1 and the low-pass filter circuit are connected to the fourth node A, the input voltage VIN2 is applied to a source of the sixth transistor MP1, and a source of the seventh transistor MN1 is connected to the ground terminal GND. A gate voltage of the sixth transistor MP1 is the filtered voltage $V_A$ outputted by the low-pass filter circuit, and a source voltage of the sixth transistor MP1 is the input voltage VIN2. When the transient change $\Delta V_{IN2}$ occurs in the input voltage VIN2, because the filtered voltage $V_A$ lags behind the input voltage VIN2, a transient change $\Delta V_{IN2}$ occurs in a gate-source voltage $V_{GS1}$ of the sixth transistor MP1, and a transient change $g_{mp1}\Delta V_{IN2}$ occurs in a drain current of the sixth transistor MP1. The transient current is transmitted to the second follower circuit.

The second follower circuit includes a fourth transistor MP5, an eighth transistor MN2, a ninth transistor MP6, and a tenth transistor MP7. The fourth transistor includes a control terminal, a first terminal, and a second terminal; the eighth transistor includes a control terminal, a first terminal, and a second terminal; the ninth transistor includes a control terminal, a first terminal, and a second terminal; and the tenth transistor includes a control terminal, a first terminal, and a second terminal.

In an embodiment of the present invention, the fourth transistor MP5 is a P-channel field effect transistor, the ninth transistor MP6 is a P-channel field effect transistor, the tenth transistor MP7 is a P-channel field effect transistor, and the eighth transistor MN2 is an N-channel field effect transistor.

A drain of the eighth transistor MN2 is connected to a drain of the ninth transistor MP6, a gate of the ninth transistor MP6 is connected to a gate of the tenth transistor MP7, the drain of the ninth transistor MP6 is connected to the gate of the ninth transistor MP6, a gate of the eighth transistor MN2 is connected to the fifth node, and a source of the eighth transistor MN2 is connected to the ground terminal GND. A source of the ninth transistor MP6 is connected to a power terminal VDD, a source of the tenth transistor MP7 is connected to the power terminal VDD, and a drain of the tenth transistor MP7 is connected to a source of the fourth transistor MP5 to form an output terminal of the transient response enhancement circuit. A gate of the fourth transistor MP5 is connected to the third node B, and a drain of the fourth transistor MP5 is connected to the ground terminal GND. The eighth transistor MN2 and the seventh transistor MN1 form a current mirror structure, and copy the transient current generated by the second transient voltage generation circuit to a current branch formed by the eighth transistor MN2 and the ninth transistor MP6. A transient current flowing through the eighth transistor MN2 may be represented as: $\frac{g_{mp1}g_{mn2}}{g_{mn1}}\Delta V_{IN2}$. The ninth transistor MP6 and the tenth transistor MP7 form a current mirror structure, and further copy the current to a current branch in which the tenth transistor MP7 is located. A transient current flowing through the tenth transistor MP7 may be represented as: $\frac{g_{mp1}g_{mn2}g_{mp7}}{g_{mn1}g_{mp6}}\Delta V_{IN2}$. The second transient voltage $\Delta V_{O2}$ generated by the transient current flowing through the tenth transistor MP7 may be represented as:

$$\Delta V_{O2} = \frac{g_{mp1}g_{mn2}g_{mp7}}{g_{mn1}g_{mp5}g_{mp6}}\Delta V_{IN2}$$

where $g_{mp1}$, $g_{mp5}$, $g_{mp6}$ and $g_{mp7}$ are respectively transconductances of the transistor MP1, the transistor MP5, the transistor MP6, and the transistor MP7, and $g_{mn1}$, $g_{mn2}$ are respectively transconductances of the transistor MN1 and the transistor MN2.

For a source follower structure formed by the tenth transistor MP7 and the fourth transistor MP5, an inputted voltage $V_B$ and an outputted first transient voltage VO1 of the tenth transistor MP7 and the fourth transistor MP5 in a transient state are represented as:

$$VO1 = V_B + V_{GS5} + \Delta V_B = VIN1 + V_{GS4} + V_{GS5} + \frac{g_{mp2}}{g_{mp4}}\Delta V_{IN2}$$

where $g_{mp2}$ and $g_{mp4}$ are respectively transconductances of the transistor MP2 and the transistor MP4.

By superimposing impact of a transient bias current of the tenth transistor MP7 on the outputted transient enhancement voltage VO, it may be obtained that a final transient enhancement voltage is represented as:

$$VO = VO1 + \Delta V_{O2} = VIN1 + V_{GS4} + V_{GS5} + (\frac{g_{mp2}}{g_{mp4}} + \frac{g_{mp1}g_{mn2}g_{mp7}}{g_{mn1}g_{mp5}g_{mp6}})\Delta V_{IN2}$$

It can be seen from that, when the transient change $\Delta V_{IN2}$ occurs in the input voltage VIN2, the transient enhancement voltage VO can quickly respond to the change of the input voltage VIN2, thereby achieving a transient response.

Referring to FIG. 6, the low dropout regulator provided in this embodiment of the present invention can improve a transient response speed and provide a stable output voltage to a load, thereby resolving problems in the related art, and effectively reduce amplitudes of overshoot and undershoot of the output voltage and a time taken for the output voltage to return to a steady-state value, which has good application value.

In addition, the low dropout regulator provided in this embodiment of the present invention may be used in a power management chip. A specific structure of the low dropout regulator in the power management chip is not described in detail herein.

The foregoing low dropout regulator may further be used in an electronic device, and used as an important component of a power supply assembly. The electronic device described herein refers to a computer device that can be used in mobile environments and support a plurality of communication standards such as GSM, EDGE, TD_SCDMA, TDD_LTE and FDD_LTE, including a mobile phone, a laptop, a tablet, a vehicle-mounted computer, or the like. In addition, the technical solutions provided in the embodiments of the present invention are also applicable to cases in which other power supply assemblies are applied, such as a communication base station and intelligent connected vehicles.

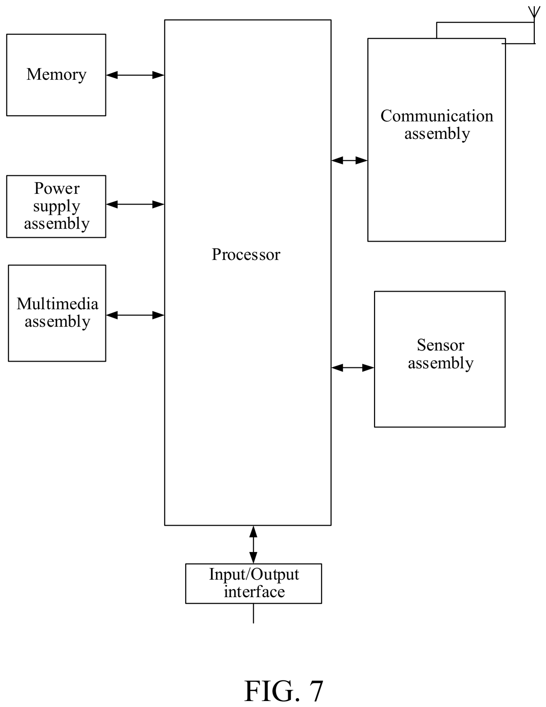

As shown in FIG. 7, the electronic device includes at least a processor and a memory, and may further include a communication assembly, a sensor assembly, a power supply assembly, a multimedia assembly, and an input/output interface according to practical requirements. The memory, the communication assembly, the sensor assembly, the power supply assembly, the multimedia assembly, and the input/output interface are all connected to the processor. The memory may be a static random-access memory (SRAM), an electrically erasable programmable read only memory (EEPROM), an erasable programmable read only memory (EPROM), a programmable read only memory (PROM), a read only memory (ROM), a magnetic memory, a flash memory, and the like. The processor may be a central processing unit (CPU), a graphics processing unit (GPU), a field-programmable gate array (FPGA), an application specific integrated circuit (ASIC), a digital signal processing (DSP) chip, and the like. Another communication assembly, sensor assembly, power supply assembly, multimedia assembly, and the like may be achieved by using a general-purpose component. Details are not described herein.

Compared with the related art, in the low dropout regulator provided in the present invention, the feedback module samples the output voltage, the operational amplifier clamps the feedback voltage outputted by the feedback module, the unity gain buffer circuit in the transient response enhancement circuit outputs the first voltage to respond to a change of a steady-state voltage. Meanwhile, the transient voltage generation circuit in the transient response enhancement circuit generates the second voltage to respond to a change of a transient voltage, superimposes the second voltage onto the first voltage, and outputs a superimposed voltage to the power transistor, and then the power transistor outputs the superimposed voltage to a load. The low dropout regulator can improve a transient response speed and provide a stable output voltage to the load, thereby resolving problems in the related art, and effectively reduce amplitudes of overshoot and undershoot of the output voltage and a time taken for the output voltage to return to a steady-state value, which has good application value.

The foregoing describes in detail the transient-response low dropout regulator, the chip, and the electronic device provided in the present invention. For a person of ordinary skill in the art, any obvious changes made to the present invention without departing from the essential content of the present invention will constitute an infringement of the patent right of the present invention, and will be subject to the corresponding legal liability.

## Claims

1. A transient-response low dropout regulator, comprising an operational amplifier, a feedback module, a power transistor, and a transient response enhancement circuit, an output voltage of the low dropout regulator being applied to a load circuit, wherein

   the feedback module is configured to sample the output voltage and output a feedback voltage;
   the operational amplifier is configured to: clamp, based on a reference voltage, the feedback voltage outputted by the feedback module, and output an analog voltage to the transient response enhancement circuit;
   the transient response enhancement circuit comprises a unity gain buffer circuit and at least one transient voltage generation circuit, wherein the unity gain buffer circuit is configured to output a first voltage based on the analog voltage, the transient voltage generation circuit is configured to generate a second voltage based on an input voltage, and the transient response enhancement circuit is configured to output a transient enhancement voltage to the power transistor based on the first voltage and the second voltage; and
   the power transistor is configured to generate the output voltage based on the transient enhancement voltage.

2. The transient-response low dropout regulator according to claim 1, wherein

   the reference voltage is applied to a first input terminal of the operational amplifier, the feedback voltage outputted by a second terminal of the feedback module is applied to a second input terminal of the operational amplifier, a first power input terminal of the operational amplifier is connected to a power terminal, a second power input terminal of the operational amplifier is grounded, and an output terminal of the operational amplifier is connected to a first input terminal of the transient response enhancement circuit;
   a second input terminal of the transient response enhancement circuit is connected to a first terminal of the feedback module and a second terminal of the power transistor, a first power input terminal of the transient response enhancement circuit is connected to the power terminal, a second power input terminal of the transient response enhancement circuit is grounded, and an output terminal of the transient response enhancement circuit is connected to a control terminal of the power transistor;

a third terminal of the feedback module is grounded; and

a first terminal of the power transistor is connected to the power terminal.

3. The transient-response low dropout regulator according to claim 2, wherein the transient response enhancement circuit comprises the unity gain buffer circuit, a low-pass filter circuit, a first transient voltage generation circuit, and a first follower circuit, wherein

the unity gain buffer circuit is configured to perform voltage buffering on the analog voltage and output a buffered voltage to the first follower circuit;

the low-pass filter circuit is configured to perform low-pass filtering on the input voltage and output a filtered voltage, the filtered voltage lagging behind the input voltage;

the first transient voltage generation circuit is configured to generate a first transient voltage based on the input voltage and the filtered voltage, and output the first transient voltage to the first follower circuit; and

the first follower circuit is configured to output the transient enhancement voltage based on the buffered voltage and the first transient voltage.

4. The transient-response low dropout regulator according to claim 3, wherein the unity gain buffer circuit comprises a first transistor; the low-pass filter circuit comprises a second transistor, a bias current source, a first resistor, and a first capacitor; the first transient voltage generation circuit comprises a third transistor; and the first follower circuit comprises a fourth transistor and a fifth transistor, wherein

the analog voltage is applied to a control terminal of the first transistor, a second terminal of the first transistor is grounded, and a first terminal of the first transistor is connected to a second terminal of the third transistor and a control terminal of the fourth transistor;

a control terminal of the second transistor is connected to a first terminal of the first resistor, the input voltage is applied to a first terminal of the second transistor, a second terminal of the second transistor is connected to a first terminal of the bias current source, and the control terminal of the second transistor is connected to the second terminal of the second transistor;

a second terminal of the bias current source is grounded;

a second terminal of the first resistor is connected to a first terminal of the first capacitor and a control terminal of the third transistor;

a second terminal of the first capacitor is grounded;

the input voltage is applied to a first terminal of the third transistor;

a first terminal of the fourth transistor is connected to a second terminal of the fifth transistor and is connected to the output terminal of the transient response enhancement circuit, and a second terminal of the fourth transistor is grounded; and

a follower control signal is applied to a control terminal of the fifth transistor, and a first terminal of the fifth transistor is connected to the power terminal.

5. The transient-response low dropout regulator according to claim 2, wherein the transient response enhancement circuit comprises the unity gain buffer circuit, a low-pass filter circuit, a second transient voltage generation circuit, and a second follower circuit, wherein

the unity gain buffer circuit is configured to perform voltage buffering on the analog voltage and output a buffered voltage to the second follower circuit;

the low-pass filter circuit is configured to perform low-pass filtering on the input voltage and output a filtered voltage, the filtered voltage lagging behind the input voltage;

the second transient voltage generation circuit is configured to generate a second transient voltage based on the input voltage and the filtered voltage, and output the second transient voltage to the second follower circuit; and

the second follower circuit is configured to output the transient enhancement voltage based on the analog voltage and the second transient voltage.

6. The transient-response low dropout regulator according to claim 5, wherein the unity gain buffer circuit comprises a first transistor; the low-pass filter circuit comprises a second transistor, a bias current source, a first resistor, and a first capacitor; the second transient voltage generation circuit comprises a sixth transistor and a seventh transistor; and the second follower circuit comprises a fourth transistor, an eighth transistor, a ninth transistor, and a tenth transistor, wherein

the analog voltage is applied to a control terminal of the first transistor, a second terminal of the first transistor is grounded, and a first terminal of the first transistor is connected to a second terminal of a third transistor and a control terminal of the fourth transistor;

a control terminal of the second transistor is connected to a first terminal of the first resistor, the input voltage is applied to a first terminal of the second transistor, a second terminal of the second transistor is connected to a first terminal of the bias current source, and the control terminal of the second transistor is connected to the second terminal of the second transistor;

a second terminal of the bias current source is grounded;

a second terminal of the first resistor is connected to a first terminal of the first capacitor, a control terminal of the third transistor, and a control terminal of the sixth transistor;

a second terminal of the first capacitor is grounded;

the input voltage is applied to a first terminal of the third transistor;

the input voltage is applied to a first terminal of the sixth transistor, and a second terminal of the sixth transistor, a control terminal of the seventh transistor, a first terminal of the seventh transistor, and a control terminal of the eighth transistor are connected to a fifth node;

a second terminal of the seventh transistor is grounded;

a first terminal of the eighth transistor is connected to a second terminal of the ninth transistor, and a second terminal of the eighth transistor is grounded;

a control terminal of the ninth transistor is connected to a control terminal of the tenth transistor, a first terminal of the ninth transistor is connected to the power terminal, and the control terminal of the ninth transistor is connected to the second terminal of the ninth transistor;

a first terminal of the tenth transistor is connected to the power terminal, and a second terminal of the tenth transistor is connected to a first terminal of the fourth transistor and is connected to the output terminal of the transient response enhancement circuit; and

a second terminal of the fourth transistor is grounded.

7. The transient-response low dropout regulator according to claim 2, wherein the transient response enhancement circuit comprises the unity gain buffer circuit, a low-pass filter circuit, a first transient voltage generation circuit, a second transient voltage generation circuit, and a second follower circuit, wherein

the unity gain buffer circuit is configured to perform voltage buffering on the analog voltage and output a buffered voltage to the second follower circuit;

the low-pass filter circuit is configured to perform low-pass filtering on the input voltage and output a filtered voltage, the filtered voltage lagging behind the input voltage;

the first transient voltage generation circuit is configured to generate a first transient voltage based on the input voltage and the filtered voltage, and output the first transient voltage to the second follower circuit;

the second transient voltage generation circuit is configured to generate a second transient voltage based on the input voltage and the filtered voltage, and output the second transient voltage to the second follower circuit; and

the second follower circuit is configured to output the transient enhancement voltage based on the analog voltage, the first transient voltage, and the second transient voltage.

8. The transient-response low dropout regulator according to claim 7, wherein the unity gain buffer circuit comprises a first transistor; the low-pass filter circuit comprises a second transistor, a bias current source, a first resistor, and a first capacitor; the first transient voltage generation circuit comprises a third transistor; the second transient voltage generation circuit comprises a sixth transistor and a seventh transistor; and the second follower circuit comprises a fourth transistor, an eighth transistor, a ninth transistor, and a tenth transistor, wherein

the analog voltage is applied to a control terminal of the first transistor, a first terminal of the first transistor is grounded, and the first terminal of the first transistor is connected to a second terminal of the third transistor and a control terminal of the fourth transistor;

a control terminal of the second transistor is connected to a first terminal of the first resistor, the input voltage is applied to a first terminal of the second transistor, a second terminal of the second transistor is connected to a first terminal of the bias current source, and the control terminal of the second transistor is connected to the second terminal of the second transistor;

a second terminal of the bias current source is grounded;

a second terminal of the first resistor is connected to a first terminal of the first capacitor and a control terminal of the third transistor;

a second terminal of the first capacitor is grounded;

the input voltage is applied to a first terminal of the third transistor;

a first terminal of the sixth transistor is connected to the input voltage, and a second terminal the sixth transistor, a control terminal of the seventh transistor, a first terminal of the seventh transistor, and a control terminal of the eighth transistor are connected to a fifth node;

a second terminal of the seventh transistor is grounded;

a first terminal of the eighth transistor is connected to a second terminal of the ninth transistor, and a second terminal of the eighth transistor is grounded;

a control terminal of the ninth transistor is connected to a control terminal of the tenth transistor, a first terminal of the ninth transistor is connected to the power terminal, and the control terminal of the ninth transistor is connected to the second terminal of the ninth transistor;

a first terminal of the tenth transistor is connected to the power terminal, and a second terminal of the tenth transistor is connected to a first terminal of the fourth transistor and is connected to the output terminal of the transient response enhancement circuit; and

a second terminal of the fourth transistor is grounded.

9. A power management chip, comprising the transient-response low dropout regulator according to any one of claims 1 to 8.

10. An electronic device, comprising the transient-response low dropout regulator according to any one of claims 1 to 8.

FIG. 1

FIG. 2

FIG. 3

FIG. 4

FIG. 5

17

FIG. 6

FIG. 7

## INTERNATIONAL SEARCH REPORT

| International application No. |
| --- |
| **PCT/CN2024/086150** |

**A. CLASSIFICATION OF SUBJECT MATTER**

G05F1/56(2006.01)i

According to International Patent Classification (IPC) or to both national classification and IPC

**B. FIELDS SEARCHED**

Minimum documentation searched (classification system followed by classification symbols)

IPC: G05F1/-

Documentation searched other than minimum documentation to the extent that such documents are included in the fields searched

Electronic data base consulted during the international search (name of data base and, where practicable, search terms used)

CNKI, CNTXT, ENTXTC, WPABSC: 低压差线性稳压器, 瞬态响应, 增强, 缓冲, 滞后, 延迟, 跨导, 滤波, 电压, 反馈, LDO, transient response, enhance, buffer, delay, hysteresi+, transconductanc+, filter+, voltage, feedback

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116069107 A (VANCHIP (TIANJIN) ELECTRONIC TECHNOLOGY CO., LTD.) 05 May 2023 (2023-05-05) <br> claims 1-10, and description, paragraphs [0004]-[0075] | 1-10 |
| X | CN 113655837 A (CHENGDU SINO MICROELECTRONICS TECHNOLOGY CO., LTD.) 16 November 2021 (2021-11-16) <br> description, paragraphs [0006]-[0029] and figure 3 | 1-3, 5, 7, 9-10 |
| A | CN 115525087 A (NANJING ZHILINGXIN TECHNOLOGY CO., LTD.) 27 December 2022 (2022-12-27) <br> entire document | 1-10 |
| A | CN 109164861 A (SHANGHAI HYNITRON MICROELECTRONIC CO., LTD.) 08 January 2019 (2019-01-08) <br> entire document | 1-10 |
| A | CN 115840483 A (XIDIAN UNIVERSITY) 24 March 2023 (2023-03-24) <br> entire document | 1-10 |
| A | US 2021389790 A1 (INFINEON TECHNOLOGIES AG.) 16 December 2021 (2021-12-16) <br> entire document | 1-10 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 June 2024** | **26 June 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086150**

| Patent document cited in search report | | | Publication date (day/month/year) | Patent family member(s) | | | Publication date (day/month/year) |
|---|---|---|---|---|---|---|---|
| CN | 116069107 | A | 05 May 2023 | None | | | |
| CN | 113655837 | A | 16 November 2021 | None | | | |
| CN | 115525087 | A | 27 December 2022 | None | | | |
| CN | 109164861 | A | 08 January 2019 | None | | | |
| CN | 115840483 | A | 24 March 2023 | None | | | |
| US | 2021389790 | A1 | 16 December 2021 | US | 11733725 | B2 | 22 August 2023 |
| | | | | DE | 102020115851 | B3 | 28 October 2021 |

Form PCT/ISA/210 (patent family annex) (July 2022)